# EUROPÄISCHE PATENTANMELDUNG

(11) **EP 1 482 435 A1**
(43) Veröffentlichungstag der Anmeldung: **01.12.2004**
(21) Anmeldenummer: 03011812.9
(22) Anmeldetag: 26.05.2003
(51) Int. Cl.: G06F 17/60

(54) **Verkaufsvorrichtung für multimediale Werke**

(71) Anmelder: Franz Maurer Nachf. GmbH & Co.KG, 23556 Lübeck (DE)
(72) Erfinder: Salzmann, Martin, Dipl.-Kfm., 23568 Lübeck (DE)
(74) Vertreter: Vollmann, Heiko, Dipl.-Ing.

(57) **Zusammenfassung**

Die Verkaufsvorrichtung für multimediale Werke in digitaler Form vorgesehen und weist mindestens eine Rechnereinheit (1) auf, der ein oder mehrere Datenspeicher (2) zugeordnet sind, auf denen multimediale Werke in Dateiform gespeichert sind. Sie weist mindestens einen Auswahlterminal (10) auf, an dem die Werke zumindest teilweise anzeig- bzw. abspielbar sind und an dem ein oder mehrere Werke auswählbar sind, wobei die getroffene Auswahl von Werken am Auswahlterminal (10) anzeigbar ist. Weiter ist eine Ausgabeeinheit vorgesehen, welche die ausgewählten Werke in Dateiform ausgibt oder auf einem zur Mitnahme durch den Kunden bestimmten Datenträger speichert.

## Beschreibung

Die Erfindung betrifft eine Verkaufsvorrichtung für multimediale Werke in digitaler Form.

Es zählt zum Stand der Technik, multimediale Werke, zum Beispiel Druckwerke wie Bücher, Artikel und dergleichen, Musikwerke, wie O-pern, Musicals oder Songs oder Filmwerke, wie Filme oder mit Musik unterlegte Filmclips sowie auch andere Werke, beispielsweise in Form von Computerspielen in digitaler Form auf Datenträgern zu vertreiben. Dabei haben sich in den letzten Jahren insbesondere CD's und DVD's als Datenträger durchgesetzt, doch werden vermehrt auch bewegungsfrei abtastbare Datenträger, zum Beispiel Memorycards, USB-Sticks und dergleichen eingesetzt um solche Daten zu speichern.

Ein Problem bei diesen fertig konfektionierten Datenträgern ist es, dass der Kunde stets eine Anzahl von Werken, die in digitaler Form auf einem Datenträger gespeichert sind, erwerben muss, von denen er vorzugsweise nur einige wenige erwerben möchte.

Darüber hinaus haben sich insbesondere im Bereich der Musikwerke zwischenzeitlich Vertriebsformen etabliert, bei denen einzelne Musiktitel gegen Entgeld oder auch unentgeldlich aus dem Internet herunter geladen werden können. Diese Vertriebsform hat allerdings den Nachteil, dass zum einen ein schneller Internetzugang, typischerweise ein DSL-Zugang benötigt wird, um in angemessener Zeit die Dateien herunterladen zu können und andererseits entsprechende Hard- und Software benutzerseitig vorzuhalten ist, um diese Dateien auf einen in mehreren Geräten abspielbaren Datenträger abzuspeichern, insbesondere auf CD oder DVD zu brennen.

Aus der DE 299 14 175 U 1 ist es bekannt, um die Auswahl beim Kauf von Musik-CD's zu erleichtern, Hörproben der im Laden angebotenen CD's auf einen Datenspeicher abzulegen, die mittels eines Computers verwaltet werden und an sogenannten Abhörterminals zur Verfügung stehen. Die Abhörterminals umfassen einen Barcodelaser, der den auf der CD-Hülle angebrachten Barcode erfasst, wobei dann rechnerseitig diesem Barcode die auf der CD befindlichen Titel zugeordnet und dem Abhörterminal zur Verfügung gestellt werden, und zwar in Form von Hörproben. Der Kunde im Laden wählt sich aus den dort ausgestellten CD's, eine ihn interessierende aus um dann den entsprechenden Barcode am Abhörterminal einzulesen, die entsprechenden Hörproben zu erhalten und gegebenenfalls den industriell konfektionierten Datenträger zu erwerben oder auch nicht. Auch mit diesem bekannten System können nur fertig konfektionierte Datenträger angeboten und gehandelt werden. Ein weiterer Nachteil besteht darin, dass die einzuscannenden CD-Hüllen zum Abhörterminal gebracht werden müssen, wo sie regelmäßig liegen bleiben um dann durch Fachpersonal kostenintensiv wieder einsortiert werden zu müssen.

Vor diesem Hintergrund liegt der Erfindung die Aufgabe zugrunde, eine Verkaufsvorrichtung zu schaffen, welche die vorgenannten Nachteile vermeidet und dem Kunden ermöglicht, nach geeigneter Auswahl nur die Werke in Form digitaler Dateien zu erwerben, die er auch tatsächlich erwerben möchte.

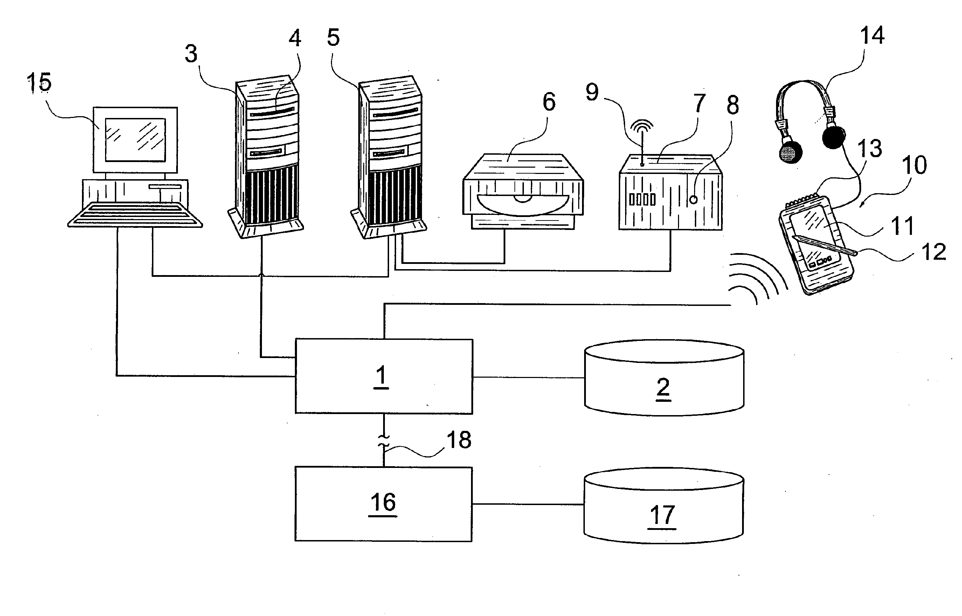

Diese Aufgabe wird gemäß der Erfindung durch die in Anspruch 1 gegebenen Merkmale gelöst. Vorteilhafte Ausgestaltungen der Erfindung sind in den Unteransprüchen sowie der nachfolgenden Beschreibung und der Zeichnung angegeben.

Grundgedanke der vorliegenden Erfindung ist es, eine Verkaufsvorrichtung zu schaffen, mit der sich der Kunde auf einfache und kostengünstige Weise die Werke, insbesondere Musiktitel, Filmtitel, Buchtitel oder Computerspiele zusammenstellen und auf beliebige Datenträger oder auch datenträgerlos ausgeben lassen kann, ohne dabei an die industriell konfektionierten Werkzusammenstellungen gebunden zu sein. Die erfindungsgemäße Verkaufsvorrichtung ist zur Auswahl und zum Verkauf multimedialer Werke jeglicher Art in digitaler Dateiform geeignet, es werden jedoch im Folgenden die Funktion und Vorteile der Verkaufsvorrichtung im Wesentlichen beispielhaft anhand von Musikwerken geschildert, es versteht sich jedoch, dass in entsprechender Weise auch andere Werke mit einer solchen Vorrichtung verkauft werden können und dass auch eine gemischte Ausgabe, beispielsweise von Druckwerk, Filmwerk und Musikwerk möglich ist.

Die erfindungsgemäße Verkaufsvorrichtung weist mindestens eine Rechnereinheit, typischerweise einen Server auf, dem ein oder mehrere Datenspeicher, beispielsweise in Form von Festplatten zugeordnet sind, auf denen die vorgenannten multimedialen Werke jeweils in Dateiform digital gespeichert sind. Dieser Rechnereinheit ist mindestens ein, in der Regel aber eine Mehrzahl von Auswahlterminals zugeordnet, an denen die zum Verkauf stehenden Werke zumindest teilweise anzeig- bzw. abspielbar und an denen ein oder mehrere Werke auswählbar sind. Die an einem Auswahlterminal getroffene Auswahl von Werken wird dort angezeigt, so dass der Benutzer jederzeit feststellen kann, welche Werke er bereits ausgewählt hat. Weiterhin weist die Verkaufsvorrichtung eine Ausgabeeinheit auf, welche die ausgewählten Werke nach Abschluss der Auswahl bzw. nach Erreichen einer vorbestimmten Datenmenge in Dateiform ausgibt. Die Ausgabe kann dabei entweder als reine Datenausgabe oder auf einen zur Mitnahme durch den Kunden bestimmten Datenträger erfolgen, typischerweise der Gestalt, dass die ausgewählten Werke in Dateiform auf eine CD oder DVD gebrannt werden.

Die erfindungsgemäße Verkaufsvorrichtung vereint somit die Vorteile der sonst nur aus dem Internethandel bekannten Möglichkeit, einzelne Musiktitel in digitaler Form nach individueller Auswahl zu erwerben mit denen des konventionellen Handels, bei denen die Daten bereits auf einem Datenträger abgespeichert sind, der in handelsüblichen Geräten lesbar ist, sei es ein Festspeicher und eine CD oder DVD.

Grundsätzlich kann die erfindungsgemäße Verkaufsvorrichtung mit einem Auswahlterminal arbeiten, bei dem einzelne Interpreten oder Titel mittels Tastatureingabe, Trackball oder Touchscreen aus einer vorgegebenen Liste über diverse Menueebenen am Display auswählbar sind. Bevorzugt arbeitet jedoch die erfindungsgemäße Verkaufsvorrichtung mit einem stationären oder mobilen Auswahlterminal, welches einen Scanner, vorzugsweise einen Barcodescanner beinhaltet oder dem ein solcher zumindest zugeordnet ist, wobei dann rechnerseitig Mittel vorgesehen sind, welche eine einzelne oder gruppenweise Zuordnung von Werken in Abhängigkeit des vom Scanner erfassten Bildes, insbesondere Barcodes durchführen und am Auswahlterminal anzeigen. Typischerweise verwendet ein so ausgebildetes Auswahlterminal den auf den CD-Hüllen zu Identifikation angebrachten Barcode, wobei rechnerseitig eine Datenbank verwaltet wird, welche entsprechend dem ermittelten Barcode die Daten der zugehörigen CD wie beispielsweise Titel und Autor/Interpret sowie Titelangaben zu den einzelnen Tracks umfasst und am Auswahlterminal anzeigt bzw. entsprechende Hörproben am Auswahlterminal zur Verfügung stellt. Es können dann am Auswahlterminal die einzelnen Tracks der CD, die im Display des Terminals angezeigt werden, zunächst als Hörprobe ausgewählt und dann gegebenenfalls zum Erwerb, d. h. zur späteren Ausgabe in Dateiform auf Datenträger oder in anderer Weise ausgewählt werden. Dies kann beispielsweise dadurch erfolgen, dass die Stücke zur Hörprobe zunächst mittels eines Scrollfunktion mit einer Taste zur Hörprobe und mit einer anderen Taste zur Kaufauswahl markiert werden, wobei zweckmäßigerweise für jede Art der Auswahl der Titel mit einer entsprechenden Kennzeichnung hinterlegt wird.

Besonders vorteilhaft ist es, wenn das Auswahlterminal ein vorzugsweise über Funk mit der Rechnereinheit in Datenverbindung stehender beispielsweise akkubetriebener Kleinrechner ist, welcher ein Display, einen Lautsprecher oder Kopfhörerausgang sowie Mittel zur Dateneingabe und den Scanner umfasst. Derartige Kleinrechner können modifizierte Handhelds oder PDA's sein. Über das Display und den Lautsprecher bzw. den Kopfhörerausgang, der gegebenenfalls auch drahtlos gebildet sein kann, können multimediale Werke jeglicher Art auf dem Auswahlterminal dargestellt werden, sei es in Form einer Leserprobe, die auf dem Display angezeigt, eines Musikstücks, das über den Lautsprecher bzw. Kopfhörer angehört werden kann oder eines Videoclips, dessen Bild zusätzlich auf dem Display erscheint. Eine entsprechende Darstellung von Computerspielen ist ebenfalls möglich.

Eine solche drahtlose Datenverbindung zwischen Auswahlterminal und Rechnereinheit ist besonders vorteilhaft, da bei dieser Anordnung der Kunde nicht mit den ausgewählten CD-Hüllen zum Auswahlterminal gehen muss, sondern die Auswahl sofort treffen kann, nämlich dort, wo die entsprechende CD steht. Dies entspannt zum einen die Kundendichte im Bereich der Auswahlterminals und hat darüber hinaus den großen Vorteil, dass die Zahl der zurück zu sortierenden CD's im Vergleich zu bekannten Systemen erheblich verringert werden kann oder dass nur CD-Hüllen gegebenenfalls sogar ortsfest angebracht werden können. So kann es vorgesehen sein, dass statt der CD-Hüllen Displays aufgestellt werden, die eine Vielzahl solcher CD-Cover oder Titel zeigen, so dass es gegebenenfalls gar nicht mehr erforderlich ist, Originalprodukte im Laden auszustellen, bzw. kapitelbindend im Lager vorrätig zu halten. In gleicher Weise können Buchtitel oder Filmtitel abgebildet werden, wobei anstelle des Barcodes auch vorgesehen sein kann, dass mittels des Scanners der Titel oder die grafische Darstellung eingescannt wird und so die datenbankmäßig erforderliche Zuordnung zu den entsprechenden Werken bzw. Gruppen von Werken erfolgt.

Als Bezahlsysteme können bei der erfindungsgemäßen Verkaufsvorrichtung beliebige Systeme eingesetzt werden. Grundsätzlich wird es jedoch zweckmäßig sein, ein Abrechnungsterminal vorzusehen, mit dem das Verkaufspersonal oder gegebenenfalls die Vorrichtung selbst in Abhängigkeit der getroffenen Auswahl von Werken eine Rechnung erstellt und die Abwicklung der Rechnungsbegleichung feststellt um dann ein die Datenausgabe an die Ausgabeeinheit freigebendes Signal zu geben. Auf diese Weise kann sichergestellt werden, dass die Datenausgabe nur dann erfolgt, wenn die Abrechnung bereits erfolgt ist. Dabei ist unter Rechnung und Rechnungsausgleich im Sinne der vorliegenden Erfindung nicht eine buchaltungsmäßige Rechnung zu verstehen, sondern lediglich eine Maßnahme, welche eine Betragshöhe der Rechnung und deren Ausgleich bzw. Möglichkeit zum Ausgleich, sei es durch ein Konto oder mittels Bargeld feststellt.

Um eine Datenausgabe in handelsübliche CD oder DVD zu ermöglichen, weist die Ausgabeeinheit zweckmäßigerweise einen entsprechenden Brenner sowie einen Drucker auf, mit dem entweder die Datenträger unmittelbar beschriftet werden oder aber ein auf den Datenträger oder dessen Verpackung aufbringbares Etikett ausgedruckt wird. Alternativ kann die Ausgabeeinheit auch eine Vorrichtung zum selbsttätigen Herstellen beschrifteter Datenträger, insbesondere CD's oder DVD's umfassen, einen so genannten CD- oder DVD-Brennroboter, welcher die Arbeitsschritte vom Zuführen der Rohlinge bis zur Ausgabe der vollständig beschrifteten und mit Daten versehenen Datenträger automatisiert ausführt.

In vorteilhafter Weiterführung der Erfindung muss die Datenausgabe nicht notwendigerweise auf einen konventionellen Tonträger erfolgen, sondern kann, beispielsweise für die heute verbreiteten MP3-Player auch direkt in den Speicher, eines solchen Gerätes übertragen werden. Hierfür weist die Ausgabeeinheit vorteilhaft eine Schnittstelle zur Datenausgabe auf. Dies kann eine USB, FireWire oder andere Schnittstelle sein, wird jedoch bevorzugt eine drahtlose Schnittstelle, insbesondere eine heutzutage weit verbreitete IR-Schnittstelle oder eine Blue-Tooth-Schnittstelle sein. Auch eine Wireless-Lan-Schnittstelle kann hier vorgesehen sein. Auf diese Weise können die Dateien dann drahtlos auf die vom Kunden mitgeführten Geräte übertragen werden. Auch ist es vorgesehen, die ausgewählten Dateien dem Kunden per E-Mail oder in Form eines Downloads zur Verfügung zu stellen.

Da derzeit die Verkaufssysteme im Wesentlichen auf industriell konfektionierten Datenträger basieren ist es zweckmäßig, um insbesondere neue Titel zeitnah in die Verkaufsvorrichtung aufnehmen zu können, eine Dateneingabeeinheit zum Erfassen der Werke und deren Titel und gegebenenfalls weiterer Daten vorzusehen, eine solche Dateneingabeeinheit kann beispielsweise für CD's oder DVD's durch ein entsprechendes Laufwerk gebildet sein, mit Hilfe dieses Laufwerks sind die auf der CD bzw. DVD gespeicherten Daten auslesbar und in die Datenbank der Verkaufsvorrichtung überführbar. Der Dateneingabeeinheit kann gegebenenfalls auch noch ein Scanner und/oder eine Tastatur zugeordnet sein, um die Titel und/oder Cover bzw. Barcode zu erfassen.

Grundsätzlich wird es zweckmäßig sein, wenn diese Daten von der Musikindustrie entsprechend aufbereitet und dann beispielsweise über ein Datenkabel oder eine Internetverbiridung an einen der Verkaufsvorrichtung vorgelagertern Zentralserver übertragen werden.

Die erfindungsgemäße Verkaufsvorrichtung ist typischerweise für Läden gedacht, die heutzutage industriell konfektionierte CD's und DVD's verkaufen. Da eine Vielzahl von Läden mit einer solchen Verkaufsvorrichtung ausgestattet werden können, die zu verwaltenden Datenmengen jedoch enorm groß sind, ist es vorteilhaft, die zu speichernden Daten zentral zu speichern und über eine Datenleitung, insbesondere eine Internetverbindung mit einer örtlichen Rechnereinheit zu verbinden, in der lediglich ein Teil dieser Daten gespeichert ist, wobei gegebenenfalls Daten bedarfsweise von einem Zentralserver abgefragt werden oder periodisch ein Datenabgleich erfolgt. Mit einer solchen Konstellation kann die hardwaremäßige Ausrüstung der in jedem Laden vorhandenen Verkaufsvorrichtung wesentlich vereinfacht werden. Darüber hinaus ermöglicht diese Ausbildung auch kleinen Läden, ein vergleichsweises großes Angebot zu führen. Die Rechnereinheit gemäß der Erfindung durch mehrere Rechner auszubilden ist nicht nur hinsichtlich der Verfügungsgeschwindigkeit von Vorteil, sondern ermöglicht darüber hinaus die Hardwarekosten gering zu halten. Dabei können die Rechner, so weit sie räumlich miteinander verbunden sind über ein Netzwerk datenverbunden werden oder bei größeren Entfernungen vorzugsweise über das Internet.

Um die zu speichernden Daten mengenmäßig möglichst gering zu halten ist gemäß der Erfindung vorgesehen, dass die in digitalem Dateiformat vorliegenden Werke in komprimierter Form gespeichert werden, Musikdateien vorzugsweise im MP3-Format, Videodateien im MPEG4-Format, Buchdateien im E-Book oder PDF-Format. Die Datenausgabe wird jedoch wahlweise in komprimierter oder nicht komprimierter Form erfolgen, durch entsprechende Konvertierungsprogramme kann somit auch die in MP3-Format abgelegte Musikdatei auf Kundenwunsch im Wave-Format ausgegeben werden, damit diese auf einen üblichen CD-Spieler abspielbar ist. Es versteht sich, dass die Komprimierungsverfahren so gewählt werden, dass ein hohes Qualitätsniveau erhalten bleibt.

Um die zwischen Rechnereinheit und Auswahlterminal zu übermittelnden Daten mengenmäßig zu begrenzen, sieht die Erfindung vor, jedes Werk vollständig als Datei und zusätzlich in Form eines Ausschnittes des Werkes als Zusatzdatei zu speichern oder zumindest als solche an die Auswahleinheit auszugeben. Eine solche Zusatzdatei bildet somit die Hörprobe, die bei der Auswahl zur Kaufentscheidung auf die Auswahleinheit vorzugsweise drahtlos übertragen wird.

Die erfindungsgemäße Verkaufsvorrichtung kann, wie vorbeschrieben, in einem üblichen Laden mit Ausstellungsfläche, Kassensystem und entsprechend geschulten Personal eingesetzt werden, es ist jedoch gemäß einer Weiterbildung der Erfindung auch eine Konfiguration vorgesehen, welche den vollautomatischen Betrieb gewährleistet, beispielsweise in Selbstbedienungsläden, in Tankstellen und dergleichen, wo geschultes Personal nicht zur Verfügung steht. Dann ist die Verkaufsvorrichtung zweckmäßigerweise in einem im Wesentlichen geschlossenen Gehäuse angeordnet, wobei lediglich die Auswahleinheit ein vorzugsweise von außen zugänglichen Touchscreen oder ein Display mit Tastatur oder anderer Eingabeeinrichtung aufweist und das Abrechnungsterminal ein Geld- und/oder Kreditkartenlesegerät aufweist sowie eine Geldaufnahme und - Auswerteinrichtung. Dann kann der Kunde am Automaten selbst mittels des Touchscreen bzw. der zusätzlichen Eingabeeinrichtung die für ihn interessanten Titel am Display auswählen, diese gegebenenfalls in Form einer Hörprobe anhören um dann seine Auswahl zu treffen und nach entsprechendem Geldeinwurf bzw. Einführung seiner Kreditkarte in das Gerät die Datenausgabe zu aktivieren, sei es über eine der vorgenannten Schnittstellen oder in Form eines Datenträgers (CD, DVD, oder andere Datenträger).

Die Erfindung ist nachfolgend anhand eines in der Zeichnung dargestellten Ausführungsbeispiels näher erläutert. Die Figur zeigt eine erfindungsgemäße Verkaufsvorrichtung, wie sie typischerweise in einem Fachgeschäft eingesetzt wird in stark schematisierter und vereinfachter Darstellung.

Die Verkaufsvorrichtung die anhand der Figur vereinfacht dargestellt ist, weist eine Rechnereinheit 1 in Form eines Servers 1 auf, dem ein Datenspeicher 2 zugeordnet ist. Auf dem Server 1 ist eine Datenbanksoftware installiert, welche die im Datenspeicher 2 in Form von digitalen Dateien abgespeicherten Werke (z. B. Musikstücke) verwaltet. Die hier dargestellte Verkaufsvorrichtung ist für den Verkauf von Musikstücken konzipiert, die im Datenspeicher 2 in Form von MP3-Dateien abgelegt sind. Darüber hinaus sind im Datenbankprogramm die entsprechenden Zuordnungen zu den Dateien erfasst, entsprechend den auf einer CD-Hülle bzw. dem CD-Label aufgedruckten Daten. Diese Daten umfassen insbesondere den Barcode, den Titel und Autor der CD sowie die Titel der einzelnen Tracks (Musikstücke). Darüber hinaus sind im Datenspeicher 2 zu jedem Werk, also zu jeder im MP3-Format gespeicherten Datei eine ebenfalls im MP3-Format abgelegte Hörprobe gespeichert, welche einen Ausschnitt von cirka 30 Sekunden des jeweiligen Werks umfasst. Diese Hörprobendateien weisen typischerweise einen höheren Komprimierungsgrad als die das vollständige Werk bzw. den vollständigen Track (Musikstück) umfassende Datei auf.

Um die vorgenannten Daten in die Verkaufsvorrichtung einzugeben ist eine Dateneingabeeinheit 3 in Form eines PC's vorgesehen. Die Dateneingabeeinheit 3 umfasst ein DVD-Laufwerk 4 sowie ein in der Zeichnung nicht dargestelltes Display sowie eine Tastatur sowie gegebenenfalls noch einen Scanner oder Barcodescanner. Mittels der Dateneingabeeinheit 3 wird eine Musik-CD, auf der regelmäßig ein oder mehrere Wave-Dateien abgespeichert sind, eingelesen, dabei wird jede einzelne Wave-Datei in eine MP3-Datei konvertiert, an den Server 1 übermittelt, der diese mittels des Datenbankprogramms verwaltet und im Datenspeicher 2 ablegt. Die zugehörigen Daten wie Titel, Autor und Titel der einzelnen Tracks (Musikstücke) können entweder über die Tastatur eingegeben oder über den Scanner eingelesen werden, gegebenenfalls auch kombiniert. Die Dateneingabeeinheit 3 ist über eine übliche Netzwerkverbindung mit dem Server 1 verbunden.

Für die Ausgabe der Daten ist eine Ausgabeeinheit 5 in Form eines PC's vorgesehen, der einen CD-Brenner 6 mit Beschriftungseinheit sowie eine Schnittstelleneinheit 7 ansteuert. Weiterhin ist der Ausgabeeinheit 5 ein in der Figur nicht dargestellter Drucker zugeordnet. Mittels der Ausgabeeinheit 5 wird nach einer, weiter unten noch im einzelnen beschriebenen, erfolgten Kundenauswahl eine Anzahl von MP3-Dateien mit den zugehörigen Druckdaten ausgegeben, und zwar wahlweise auf einen Datenträger, hier insbesondere eine CD, auf den diese Daten in einen vom Kunden angegebenen Format, beispielsweise MP3 oder aber auch wieder konvertiert in das Wave-Format, gebrannt werden. Diese CD wird dabei auch mittels Beschriftungseinheit beschriftet, und zwar mit den Titeln der Tracks sowie deren Interpreten.

Mittels des Druckers wird gleichzeitig ein Aufkleber für das Cover erstellt, welcher die Titel der einzelnen in Dateiform auf die CD gebrannten Musikstücke in der Reihenfolge, wie sie auf der CD abgelegt sind, ausgibt. Alternativ kann auch ein entsprechendes Cover für eine CD-Hülle mit den vorgenannten Angaben ausgedruckt werden. Dies alles wird von dem Rechner der Ausgabeeinheit 5 gesteuert.

Für die Kunden, welche die Daten nicht auf einem Datenträger, insbesondere der CD erhalten wollen, sondern direkt auf ein mitgebrachtes Gerät zu übertragen wünschen, ist die Schnittstelleneinheit 7 vorgesehen. Die Schnittstelleneinheit weist eine USB- und eine FireWire-Schnittstelle auf, sie ist darüber hinaus mit einem LAN-Anschluss versehen, über welche Drittgeräte mittels Kabel zum Empfang der von der Ausgabeeinheit 5 abgegebenen Daten angeschlossen werden können. Darüber hinaus weist die Schnittstelleneinheit 7 eine Infrarot-Schnittstelle 8 auf sowie eine Blue-Tooth-Schnittstelle 9. Darüber hinaus ist in der Schnittstelleneinheit 8 noch eine weitere Funk gestützte Schnittstelle, nämlich Wireless-Lan integriert. Über diese drei Schnittstellen kann eine drahtlose Datenausgabe erfolgen, jeweils unter Einsatz der im Wesentlichen genormten Protokolle. Auch die auf ein geeignetes Wiedergabegerät übertragenen Dateien enthalten die für den Kunden grundlegenden Dateibezeichnungen wie Interpret und Titel.

Wesentlicher Bestandteil der Verkaufsvorrichtung sind Auswahleinheiten in Form von Terminals 10, von denen in der Figur eines beispielhaft dargestellt ist. Das Auswahlterminal 10 ist ein Minicomputer in Form eines modifizierten Handhelds, der über eine genormte Funkschnittstelle (Wireless-LAN) mit dem Server 1 datenverbunden ist. Das dargestellte Auswahlterminal umfasst einen Touchscreen 11, das in an sich bekannter Weise mit dem Finger oder bevorzugt mit einem Stift 12 steuerbar ist. Alternativ kann statt des Touchscreen 11 auch ein Display mit entsprechenden Steuertasten vorgesehen sein. An einer Stirnseite des Auswahlterminals 10 ist ein Barcodelaser 13 als Scanner vorgesehen. An das Auswahlterminal 10 angeschlossen ist ein Kopfhörer 14.

Zur Auswahl der zu erwerbenden Musikstücke wird dem Kunden im Laden ein Auswahlterminal 10 zur Verfügung gestellt. Er geht dann mit dem Auswahlterminal durch den Laden und trifft eine erste Auswahl durch Ansehen der dort ausgestellten CD-Hüllen oder CD's. Wenn ihn ein Titel einer solchen CD-Hülle anspricht, scannt er den auf der CD-Hülle meist rückseitig angeordneten Barcode mit Hilfe des Barcodelesers 13 ein, in dem er eine entsprechende Taste am Auswahlterminal 10 aktiviert oder das Touchscreen 11 an der entsprechenden Stelle ansteuert. Die eingescannten Daten werden per Funk zum Server 1 übertragen, wo sie datenbankmäßig verarbeitet werden. Vom Server 1 werden dann entsprechende Hörproben sowie die zugehörigen Titel der einzelnen Musikstücke der CD, deren Barcode eingelesen wurde, an das Auswahlterminal 10 übertragen. Auf dem Display werden dann sämtliche Titel/Tracks dieser CD untereinander angezeigt, wobei eine Scrollfunktion vorgesehen ist, falls mehr Titel auf der CD sind als das Display fasst. Es können dann einzelne Titel zur Hörprobe ausgewählt werden, wonach eine Anspielung dieses Titels für ca. 30 Sekunden im Kopfhörer 14 verfügbar ist. Unabhängig davon können die Titel am Display auch direkt zum Kauf ausgewählt werden, diese Auswahldaten werden sowohl in der Ausgabeeinheit 5 gespeichert als auch an den Server 1 übermittelt. Über eine Unterebne des Bedienmenues können die bereits ausgewählten Titel am Display jederzeit angezeigt werden. Auch kann über eine Unterebene die Auswahl ohne das vorherige Einscannen von CD's erfolgen, wenn eine entsprechende alphanumerische Eingabe nach Titel und Autor erfolgt, insoweit besteht über das Auswahlterminal 10 Zugriff auf die im Server 1 verwaltete Datenbank. Innerhalb des Auswahlterminals 10 sind jeweils nur die Hörproben gespeichert, die beim letzten Scannvorgang übermittelt wurden bzw. die durch alphanumerische Eingabe angefordert wurden. Bei Neuaktivierung des Scannvorgangs werden die vorher gespeicherten Hörproben automatisch überschrieben.

Sobald der Kunde seine Auswahl beendet hat oder die Auswahl eine vorbestimmte Datenmenge erreicht hat, welche ein vorbestimmtes Datenvolumen, typischerweise das einer CD, erreicht hat, wird über das Auswahlterminal 10 ein Auswahlendebefehl gesetzt, der an den Server 1 übertragen wird. Der Server 1 stellt dann entsprechend der ausgewählten Titel MP3-Dateien zusammen und übergibt diese Daten an ein Abrechnungsterminal 15, in dem der Kaufpreis ermittelt und für den Kunden eine entsprechende Rechnung erstellt wird. Bei dem Abrechnungsterminal 15 handelt es sich um ein übliches Kassensystem, mit dem auch der Zahlungsausgleich bargeldlos oder mittels Bargeld abgewickelt werden kann. Sobald die Zahlung erfolgt ist, werden vom Abrechnungsterminal 15 die Daten an die Ausgabeeinheit 5 übermittelt. Alternativ kann die Ausgabeeinheit 5 auch unmittelbar mit dem Server 1 verbunden sein, dann erfolgt über das Abrechnungsterminal 15 nach erfolgter Abrechnung und Bezahlung lediglich ein Freigabesignal, das die Daten zur Ausgabe frei gibt. Die Ausgabeeinheit 5 erstellt dann wahlweise eine CD mittels des CD-Brenners 6 mit den Musikstücken, die der Kunde zuvor ausgewählt hat, wobei das Dateiformat, in dem die Dateien auf der CD gespeichert werden, vom Kunden vorher mittels des Auswahlterminals 10 angegeben werden kann. Alternativ oder zusätzlich kann die Ausgabe der Daten auch über die Schnittstelleneinheit 7 direkt zu einem vom Kunden zu bestimmenden Gerät erfolgen.

Wenn eine Vielzahl von Verkaufsvorrichtungen, wie sie vorbeschrieben sind, in Läden an unterschiedlichen Standorten installiert werden, dann ist es zweckmäßig, neben dem im Laden befindlichen Server 1 mit dem Datenspeicher 2 einen Zentralserver 16 vorzusehen mit einem Datenspeicher 17. Dann können über den Zentralserver 16 sämtliche Daten des Systems im Datenspeicher 17 abgelegt, gepflegt und aktualisiert werden. Es kann dann entweder periodisch oder bedarfsweise vorzugsweise über eine Internetverbindung 18 ein Abgleich der Datenbanken erfolgen.

Bei Musikdateien, insbesondere jedoch bei Filmdateien werden enorme Speicherressourcen vorzuhalten sein, um ein breites Angebot realisieren zu können. Um hier Ressourcen wirtschaftlich zu nutzen ist es wirtschaftlich nicht sinnvoll, in jedem Laden einen Datenspeicher 2 vorzuhalten, welcher sämtliche Daten, also alle verfügbaren Musikstücke oder Videos beinhaltet. Diese werden zweckmäßigerweise nur auf dem Zentralserver 16 mit dem Datenspeicher 17 abgelegt. Im Datenspeicher 2 werden bevorzugt die gängigsten Titel oder sämtliche Hörproben abgelegt, so dass im Bedarfsfall, wenn der Kunde einen Titel auswählen sollte der auf dem Datenspeicher 2 nicht verfügbar ist, dieser praktisch zeitgleich über die Internetverbindung 18 vom Zentralserver, also vom Datenspiecher 17 übermittelt werden kann.

Die vorstehend beschriebenen Komponenten, deren Anzahl, deren Verbindung untereinander sowie auch die Verbindung der Server untereinander ist nur beispielhaft beschrieben worden, sie kann jedoch auch in geeigneter anderer Weise realisiert werden, wie dies der jeweils aktuelle technische Standard sinnvoll erscheinen lässt. Auch die hier beispielhaft genannten Schnittstellen und Speichermedien sind nicht auf die genannten beschränkt, sondern nur beispielhaft zu verstehen, sie können dem jeweiligen technischen Standard beliebig angepasst werden.

### Bezugszeichenliste

- 1 -: Server
- 2 -: Datenspeicher
- 3 -: Dateneingabeeinheit
- 4 -: DVD-Laufwerk
- 5 -: Ausgabeeinheit
- 6 -: CD-Brenner
- 7 -: Schnittstelleneinheit
- 8 -: Infrarot-Schnittstelle
- 9 -: Blue-Tooth-Schnittstelle
- 10 -: Auswahlterminal
- 11 -: Touchscreen
- 12 -: Stift
- 13 -: Barcodeleser
- 14 -: Kopfhörer
- 15 -: Abrechnungsterminal
- 16 -: Zentralserver
- 17 -: Datenspeicher
- 18 -: Internetverbindung

## Patentansprüche

1. Verkaufsvorrichtung für multimediale Werke in digitaler Dateiform, insbesondere für Druckwerke, Musikwerke und/oder Filmwerke sowie Werke in Form von Computerspielen, mit mindestens einer Rechnereinheit (1), der ein oder mehrere Datenspeicher (2) zugeordnet sind, auf denen multimediale Werke in Dateiform gespeichert sind, mit mindestens einem Auswahlterminal (10), an dem die Werke zumindest teilweise anzeig- bzw. abspielbar und ein oder mehrere Werke auswählbar sind, wobei die getroffene Auswahl von Werken am Auswahlterminal (10) anzeigbar ist, mit mindestens einer Ausgabeeinheit (5), welche die ausgewählten Werke in Dateiform ausgibt oder auf einem zur Mitnahme durch den Kunden bestimmten Datenträger speichert.

2. Verkaufsvorrichtung nach Anspruch 1, **dadurch gekennzeichnet, dass** dem Auswahlterminal (10) ein Scanner (13), vorzugsweise ein Barcodescanner (13) zugeordnet ist, und dass Mittel vorgesehen sind, welche eine einzelne oder gruppenweise Zuordnung von Werken in Abhängigkeit des von dem Scanner erfassten Bildes, insbesondere Barcodes durchführen und am Auswahlterminal (10) anzeigen.

3. Verkaufsvorrichtung nach einem der vorhergehenden Ansprüche, **dadurch gekennzeichnet, dass** das Auswahlterminal (10) ein vorzugsweise über Funk mit der Rechnereinheit (1) in Datenverbindung stehender Kleinrechner (10) ist, welcher ein Display (11), einen Lautsprecher oder einen Kopfhörerausgang (14), Mittel zur Dateneingabe (11, 12) und den Scanner ( 13) umfasst.

4. Verkaufsvorrichtung nach einem der vorhergehenden Ansprüche, **dadurch gekennzeichnet, dass** ein Abrechnungsterminal (15) vorgesehen ist, welches in Abhängigkeit der getroffenen Auswahl eine Rechnung erstellt und das nach Abwicklung der des Rechnungsausgleichs ein die Datenausgabe an die Ausgabeeinheit (5) freigebendes Signal gibt.

5. Verkaufsvorrichtung nach einem der vorhergehenden Ansprüche, **dadurch gekennzeichnet, dass** die Ausgabeeinheit (5) mindestens einen DVD- und/oder CD-Brenner (6) und einen Drucker oder eine Vorrichtung zum selbsttätigen Herstellen beschrifteter Datenträger, insbesondere CD's und /oder DVD's umfasst.

6. Verkaufsvorrichtung nach einem der vorhergehenden Ansprüche, **dadurch gekennzeichnet, dass** die Ausgabeeinheit (5) eine Schnittstelle (7) zur Datenausgabe, vorzugsweise eine drahtlose Schnittstelle, insbesondere eine IR-Schnittstelle (8), eine Blue-Tooth-Schnittstelle (9) und/oder eine Wireless-Lan-Schnittstelle umfasst.

7. Verkaufsvorrichtung nach einem der vorhergehenden Ansprüche, **dadurch gekennzeichnet, dass** eine Dateneingabeeinheit (3) zum Erfassen der Werke und deren Titel sowie ggf. weiterer Daten vorgesehen ist, die insbesondere eine DVD- und/oder ein CD-Laufwerk (4) umfasst.

8. Verkaufsvorrichtung nach einem der vorhergehenden Ansprüche, **dadurch gekennzeichnet, dass** die Rechnereinheit aus ein oder mehreren Rechnern (1, 16) gebildet ist, die über ein Netzwerk, insbesondere über das Internet (18) datenverbunden sind.

9. Verkaufsvorrichtung nach einem der vorhergehenden Ansprüche, **dadurch gekennzeichnet, dass** ein Zentralserver (16) vorgesehen ist, der mittels einer Datenbanksoftware die die Werke umfassenden Dateien, deren Titel und ggf. weitere Daten verwaltet und der über eine Datenleitung, vorzugsweise über eine Internetverbindung (19) eine Anzahl von Datenservern (1) speist, die nur einen Teil dieser Daten verwalten und bedarfsweise oder zeitweise vom Zentralserver (16) datenversorgt werden.

10. Verkaufsvorrichtung nach einem der vorhergehenden Ansprüche, **dadurch gekennzeichnet, dass** die die Werke umfassenden Dateien in komprimierter Form abgelegt sind, vorzugsweise als MP3-, MPEG4-, E-Book- oder PDF-Dateien , und das die Datenausgabe wahlweise in einem komprimierten oder in ein anderes Format konvertieren Format erfolgt.

11. Verkaufsvorrichtung nach einem der vorhergehenden Ansprüche, **dadurch gekennzeichnet, dass** jedes Werk vollständig als Datei und zusätzlich in Form eines Ausschnittes des Werkes als weitere (Zusatz)-Datei gespeichert oder zumindest als solche an die Auswahleinheit (10) ausgebbar ist.

12. Verkaufsvorrichtung nach einem der vorhergehenden Ansprüche, **dadurch gekennzeichnet, dass** sie in einem im wesentlichen geschlossenen Gehäuse angeordnet ist, wobei die Auswahleinheit vorzugsweise ein von außen zugängliches Touchscreen oder ein Display mit Tastatur oder anderer Eingabeeinrichtung aufweist, das Abrechnungsterminal ein Geld- und/oder Kreditkartenlesegerät und/oder eine Geldaufnahme- und Auswerteinrichtung aufweist.
